# EUROPÄISCHE PATENTSCHRIFT

(11) **EP 2 897 758 B1**
(45) Veröffentlichungstag und Bekanntmachung des Hinweises auf die Patenterteilung: **09.05.2018**
(21) Anmeldenummer: 13756390.4
(22) Anmeldetag: 26.08.2013
(51) Int. Cl.: B23K 26/04, B23K 26/03, B29C 65/16

(54) **VORRICHTUNG ZUR POSITIONSSTEUERUNG EINES LASER-BEARBEITUNGSSTRAHLS**
DEVICE FOR POSITION CONTROL OF A LASER MACHINING BEAM
DISPOSITIF DE COMMANDE DE POSITION D'UN FAISCEAU D'USINAGE LASER

(30) Priorität: 21.09.2012 DE 102012217081
(43) Veröffentlichungstag der Anmeldung: 29.07.2015
(73) Patentinhaber: LPKF Laser & Electronics AG, 30827 Garbsen (DE)
(72) Erfinder: SIEBEN, Manuel, 90768 Fürth-Vach (DE); BÖNKE, Andreas, 30459 Hannover (DE); VAN AALST, Jan, 30890 Barsinghausen (DE)
(74) Vertreter: Rau, Schneck & Hübner Patentanwälte Rechtsanwälte PartGmbB
(86) Internationale Anmeldenummer: PCT/EP2013/067647
(87) Internationale Veröffentlichungsnummer: WO 2014/044498

(56) Entgegenhaltungen:
- EP-A1- 1 977 850
- WO-A1-02/058881
- DE-A1- 3 626 944
- DE-A1- 4 025 577
- DE-A1-102005 022 095

## Beschreibung

Die Erfindung betrifft eine Vorrichtung zur Positionssteuerung eines Laser-Bearbeitungsstrahls relativ zu topografischen Strukturmarken, insbesondere von Vertiefungen, in Oberflächen von Werkstücken.

Bekannte Grundkomponenten in Laser-Bearbeitungsanlagen, wie sie auch bei der erfindungsgemäßen Vorrichtung zur Positionssteuerung eines Laser-Bearbeitungsstrahls vorgesehen sind, sind eine Steuereinrichtung, eine Laserstrahl-Zuführeinrichtung zur Bereitstellung eines Laser-Bearbeitungsstrahls sowie eine von der Steuereinrichtung gesteuerte Laserstrahl-Positioniereinrichtung zur Positionssteuerung des Laser-Bearbeitungsstrahls auf Werkstück-Oberflächen relativ zu den eingangs genannten Strukturmarken.

Zum Hintergrund der Erfindung ist als ein typisches Anwendungsgebiet die Mikrofluidik zu nennen, bei der Kunststoffbauteile mit innenliegenden, mikroskopisch kleine Kanälen zum Einsatz kommen. Diese Mikrofluidik-Bauteile selbst bestehen dabei üblicherweise aus einer unteren Platte, in deren Oberfläche als Grundkörper die benötigten mikroskopisch kleinen Kanäle zur Leitung von beispielsweise Analyseflüssigkeiten eingebracht sind. Auf dieser unteren Platte wird als Deckel eine obere, flache Platte aufgesetzt.

Beide Platten werden üblicherweise mittels Thermobonding, UV-Bonding oder mittels einer Masken-Schweißtechnik dauerhaft miteinander verbunden.

Beim Thermobonding werden die beiden Platten vollflächig erhitzt. Die eingesetzte Temperatur wird so gewählt, dass die beteiligten Materialien erweichen. Anschließend werden beide Fügepartner aufeinander positioniert und die beiden Platten werden verpresst. Da die Kontaktfläche der beiden Bauteile im Verhältnis zu den Kanalstrukturen sehr groß ist, kann ein durch das Verpressen hervorgerufener Quetsch-Schmelzefluss Kanäle blockieren oder deren Wandung verformen.

Beim UV-Bonding wird dünnschichtig ein Klebstofffilm auf eine Seite der Platten aufgetragen. Nach dem Zusammenfügen der beiden Platten wird der Klebstoff mittels UV-Licht vollflächig ausgehärtet. Auch bei diesem Verfahren besteht die Gefahr, dass Klebstoff in die Kanalstruktur vordringt und zu Blockierungen innerhalb der Mikrofluidik führt.

Ein relevanter Stand der Technik ist durch das bekannte Maskenschweißen gemäß EP 0 997 261 A1 repräsentiert, wobei ein linienförmiger Laserstrahl über eine Maske geführt wird. Der Laserstrahl tritt durch die freigestellten Maskenbereichen, wobei an diesen Stellen auf dem Bauteil eine Schweißnaht beispielsweise durch das bekannte Durchstrahlschweißen erzeugt wird. Diese Vorrichtung erfordert jedoch eine produktspezifische Maske, deren Kontur nicht veränderbar oder anpassbar ist. Zwischen Maske und Bauteil besteht ferner ein bestimmter Abstand, außerdem ist die Parallelität des Strahlenbündels begrenzt. Insgesamt führt dies dazu, dass die Kantenschärfe der so auszubildenden Schweißnähte und damit der erreichbare Miniaturisierungsgrad der Mikrofluidik begrenzt ist.

Das Schweißen von zwei thermoplastischen Kunststoff-Gefügepartnern mittels eines Galvanometerscanners in Laser-Durchstrahltechnik ist ebenfalls hinreichend bekannt. Auch solche Vorrichtungen können als nächstliegender Stand der Technik eingesetzt werden, um Schweißnähte bei mikrofluidischen Bauteilen zu erzeugen. Ein besonderes Problem stellt dabei die Positionierung der Schweißkontur zur mikrofluidischen Struktur dar. In diesem Zusammenhang ist die Verwendung von sogenannten Passermarken bekannt, die auf auszurichtenden Bauteilen im Druckverfahren aufgebracht werden. Problematisch ist jedoch die Erfassung von rein topografischen Strukturmarken, die nicht im Druckverfahren aufgebracht werden und somit auch keinen Kontrast zum Untergrund aufweisen. Als typisches Beispiel stellen die mikroskopischen Mikrofluidik-Kanäle von solche topografischen Strukturmarken dar, die sich durch Vertiefungen in der Oberfläche der unteren Platte äußern.

Aus der WO 02/058881 A1 ist eine Vorrichtung zur Positionssteuerung eines Laser-Bearbeitungsstrahls bekannt, umfassend: eine Steuereinrichtung, eine Laserstrahlzuführeinrichtung zur Bereitstellung eines Laserbearbeitungsstrahls, und eine von der Steuereinrichtung gesteuerte Laserstrahlpositioniereinrichtung zur Positionssteuerung des Laserbearbeitungsstrahls auf der Oberfläche, eine optische Erkennungseinrichtung mit einer Beleuchtungseinrichtung zur Erzeugung von die Oberfläche des Werkstücks in einem Abtastfeld beleuchtenden Strahlen, und einer das Abtastfeld erfassenden Kamera zur Aufnahme des von der Oberfläche reflektierten Strahlen, wobei das Kamerabild von der Steuereinrichtung zur Positionssteuerung des Laser-Bearbeitungsstrahls auswertbar ist.

Der Erfindung liegt nun die Aufgabe zugrunde, eine Vorrichtung zur Positionssteuerung eines Laser-Bearbeitungsstrahls relativ zu solchen topografischen Strukturmarken, wie sie beispielsweise durch die als Vertiefungen in der unteren Plattenoberfläche realisierten Mikrofluidik-Kanäle gegeben sind, anzugeben, bei der eine zuverlässige und sichere Erkennung der Strukturmarken und eine dementsprechende Positionssteuerung des Laser-Bearbeitungsstrahls erzielt werden.

Diese Aufgabe wird durch Anspruch 1 gelöst. Mit Hilfe der erfindungsgemäßen Vorrichtung ist es in vorteilhafter Weise möglich, die Strukturmarken unabhängig von aufgedruckten Passermarken als solche selbst zu erfassen. Dies ist auch unabhängig von der Farbe des unteren Bauteils möglich, da genügt, wenn das untere Bauteil einen gewissen Reflektionsgrad aufweist. Durch die Beleuchtung mit einem Parallelstrahlenbündel werden die einfallenden Lichtstrahlen im Bereich der Strukturmarken zur Seite abgelenkt und nicht reflektiert, was sich im Kamerabild durch entsprechende dunklere Kontraste abzeichnet. Mit dieser Positionsinformation bezüglich der Strukturmarken kann dann die Steuerung den Laser-Bearbeitungsstrahl entsprechend in seiner Position relativ zu den Strukturmarken, also beispielsweise in einem bestimmten Abstand entlang der seitlichen Kanten der Mikrofluidik-Kanäle steuern und eine entsprechende Schweißnaht zwischen der unteren und oberen Platte im Laser-Durchstrahlschweißverfahren herstellen. Die erfindungsgemäße Vorrichtung ist im Hinblick auf die Abtastung der Strukturmarken selbst in der Lage, diese auch in volltransparenten Bauteilen präzise zu erkennen und den Laser-Bearbeitungsstrahl entsprechend exakt zu steuern.

Gemäß einer bevorzugten Ausführungsform der erfindungsgemäßen Vorrichtung sind das Parallelstrahlenbündel der Beleuchtungseinrichtung und der Strahlengang der Kamera koaxial mit dem Laser-Bearbeitungsstrahl geführt. Dadurch ist eine enge Zuordnung zwischen dem vom Parallelstrahlenbünden erfassten Bereich der Strukturmarken und dem Laser-Bearbeitungsstrahl möglich, was der Exaktheit der mit der Vorrichtung erzielbaren Arbeitsergebnisse zugute kommt.

Sofern der Laser-Bearbeitungsstrahl mit Hilfe einer Fokussiereinrichtung auf das entsprechende Werkstück fokussiert wird, ist es von Vorteil, die Beleuchtungseinrichtung durch eine monochromatische Lichtquelle mit einer an die Brennweite der Fokussiereinrichtung angepassten Konkav-Linse zur Erzeugung eines divergenten Strahlenbündels auszulegen, das dann durch die Fokussiereinrichtung für den Laser-Bearbeitungsstrahl in ein paralleles Strahlenbündel transformiert wird. Damit wird der optische Aufbau der Vorrichtung vereinfacht, da die Fokussiereinrichtung für den Laser-Bearbeitungsstrahl gleichzeitig zur Kollimation des Parallelstrahlbündels herangezogen wird.

Das divergente Strahlenbündel der Beleuchtungseinrichtung und der Strahlengang der Kamera werden vorzugsweise über dichromatische Spiegel in den Strahlengang des Laser-Bearbeitungsstrahles eingekoppelt. Dies stellt eine bewährte Technik zur Koaxialführung verschiedener Strahlengänge einzelner optischer Komponenten dar.

Wie von Laser-Bearbeitungsmaschinen an sich bekannt ist, weist die Fokussiereinrichtung für den Laser-Bearbeitungsstrahl vorzugsweise eine F-Theta-Optik auf, die für eine saubere Fokussierung des Laser-Bearbeitungsstrahles unabhängig von dessen Durchtrittswinkel und -position durch die Optik gewährleistet.

Wenngleich die erfindungsgemäße Vorrichtung zur Positionssteuerung bei verschiedensten Topografien einsetzbar ist, stellt eine besonders bevorzugte Ausprägung der erfindungsgemäßen Vorrichtung deren Einsatz in einer Laser-Schweißeinrichtung zur Erzeugung einer Schweißnaht zwischen zwei thermoplastischen Kunststoff-Fügepartnern entsprechend der beispielsweise durch Mikrofluid-Kanäle repräsentierten Strukturmarken in mindestens einem der beiden Fügepartner, also insbesondere der unteren Basisplatte einer Mikrofluidik, dar. Bei einer erfindungsgemäßen Vorrichtung für solche Mikrofluidik-Bauteile werden Schweißnähte entlang der die Strukturmarken bildenden Mikrofluid-Kanäle im Laser-Durchstrahl-Schweißverfahren erstellt.

Bevorzugtermaßen ist die Laser-Positioniereinrichtung dann durch einen Galvanometerscanner gebildet, der durch die Steuereinrichtung auf der Basis entsprechender Steuerprogramme in seinen Achsen angesteuert wird.

Vorzugsweise wird dann mit Hilfe der Steuereinrichtung die Scannerkontur - also die vom Laser-Bearbeitungsstrahl abgetastete Spur zur Erstellung der Schweißnaht - entsprechend den von der Kamera gelieferten Lagedaten der Strukturmarken modifiziert.

Diese Modifikation erfolgt auf der Basis eines an sich bekannten, üblichen Best-Fit-Algorithmus.

Zur Verbesserung der optischen Eigenschaften der erfindungsgemäßen Vorrichtung weisen ihre optischen Komponenten eine Mehrfach-Antireflexionsbeschichtung auf.

Weitere Merkmale, Einzelheiten und Vorteile der erfindungsgemäßen Vorrichtung ergeben sich aus der nachfolgenden Beschreibung eines Ausführungsbeispiels anhand der beigefügten Zeichnungen. Es zeigen:
- Fig. 1: ein schematisches Schaubild einer Laserstrahl-Schweißeinrichtung für Mikrofluidik-Bauteile mit einer erfindungsgemäßen Vorrichtung zur Positionssteuerung des Laser-Bearbeitungsstrahls, und
- Fig. 2: einen vergrößerten Detailschnitt durch ein Mikrofluidik-Bauteil im Bereich einer Vertiefung mit einem zugeordneten Orts-Lichtintensitäts- Diagramm.

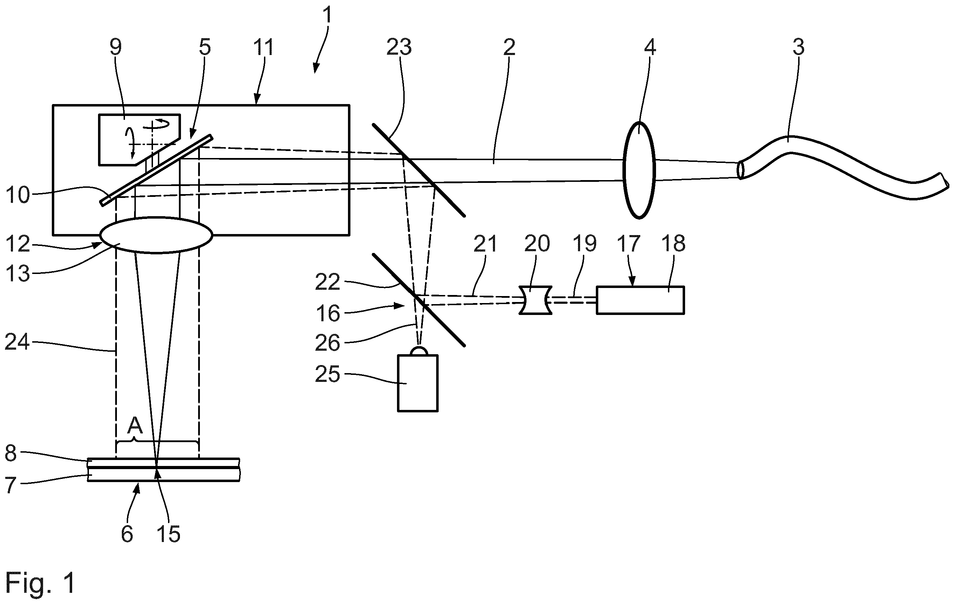

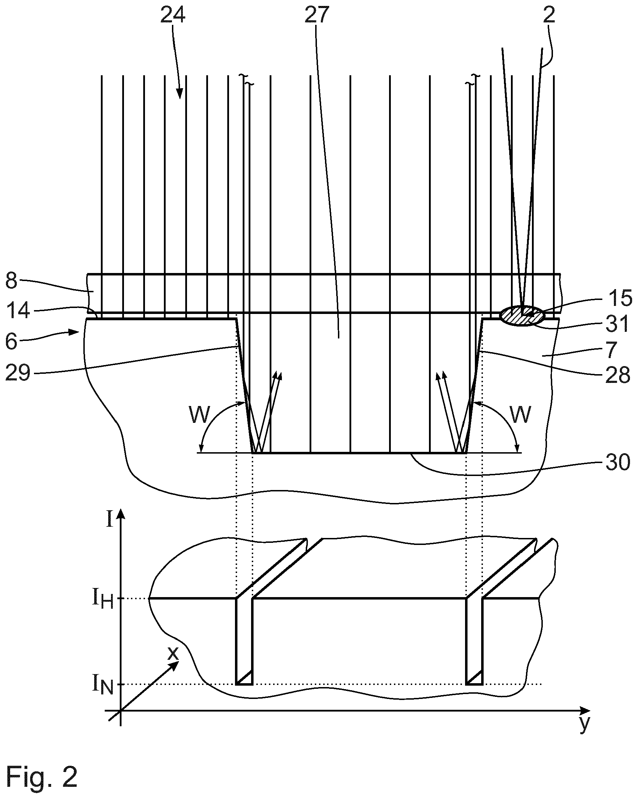

Fig. 1 zeigt eine übliche Laser-Durchstrahl-Schweißeinrichtung 1, der bei ein Laser-Bearbeitungsstrahl 2 mit Hilfe eines Lichtleiters 3 von einer nicht näher dargestellten Laserquelle herangeführt und über eine Kollimationslinse 4 kollimiert wird. Der Laser-Bearbeitungsstrahl 2 wird über einen Galvanometerscanner 5 auf eine Mikrofluidik 6 bestehend aus einer unteren Basisplatte 7 und einer darauf liegenden Deckplatte 8 geführt. Der Galvanometerscanner 5 weist dabei einen durch einen mehrachsigen Scannerantrieb 9 bewegten Scannerspiegel 10 auf. Der Scannerantrieb 9 wird durch eine als Ganzes mit 11 bezeichnete Steuereinrichtung über entsprechende Stellantriebe (nicht dargestellt) angesteuert. Zwischen Galvanometerscanner 5 und der das Werkstück darstellenden Mikrofluidik 6 ist eine Fokussiereinrichtung 12 in Form einer F-Theta-Optik 13 angeordnet, mit deren Hilfe der Laser-Bearbeitungsstrahl 2 auf die Mikrofluidik 6 und insbesondere die Oberfläche 14 der unteren Basisplatte 7 durch die lasertransparente obere Deckplatte 8 hindurch fokussiert (Fokus 15) wird (siehe auch Fig. 2 oben).

Zur Positionssteuerung des Laser-Bearbeitungsstrahls 2 ist eine als Ganzes mit 16 bezeichnete optische Erkennungseinrichtung vorgesehen, die eine Beleuchtungseinrichtung 17 mit einer monochromatischen Lichtquelle, wie beispielsweise eine Leuchtdiode 18, aufweist. Der Beleuchtungsstrahl 19 wird über eine Konkavlinse 20 zu einem divergenten Lichtbündel 21 umgesetzt, das über einen in einem Winkel von 45° im Strahlengang stehenden halbdurchlässigen Spiegel 22 und einen im Strahlengang des Laser-Bearbeitungsstrahls 2 zwischen Kollimationslinse 4 und Galvanometerscanner 5 angeordneten dichromatischen Spiegel 23 koaxial in den Strahlengang des Laser-Bearbeitungsstrahls 2 eingekoppelt wird. Das divergente Lichtbündel 21 wird gleichermaßen wie der Laser-Bearbeitungsstrahl 2 über den Scannerspiegel 10 und die F-Theta-Optik 13 geführt. Durch eine entsprechende Anpassung der Brennweite der Konkavlinse 20 an die Brennweite der F-Theta-Optik 13 wird durch letztere das divergente Lichtbündel 21 in ein kollimiertes Parallelstrahlenbündel 24 umgesetzt, das auf die Mikrofluidik 6 in einem weiten Abtastfeld A um den Fokus 15 des Laser-Bearbeitungsstrahls 2 fällt.

Als weiteres Bauteil der optischen Erkennungsvorrichtung 16 ist eine hinter dem halbdurchlässigen Spiegel 22 sitzende Kamera 25 vorgesehen, deren Strahlengang 26 nach dem halbdurchlässigen Spiegel 22 koaxial mit dem Lichtbündel 21 bzw. Parallelstrahlenbündel 24 verläuft. Mit Hilfe der Kamera 25 ist damit der vom Parallelstrahlenbündel 24 beleuchtete Bereich der Mikrofluidik 6 zu erfassen, indem sie das von dort zurückreflektierte Licht aufnimmt.

Fig. 2 verdeutlicht die Verhältnisse im Bereich eines dort stark vergrößert dargestellten Mikrofluid-Kanals 27, der als im Querschnitt trapezförmige Vertiefung in der Oberfläche 14 der unteren Basisplatte 7 angelegt ist. Aus fertigungstechnischen Gründen weisen solche Mikrofluid-Kanäle 27 seitliche Wandungen 28, 29 auf, die in einem gegenüber 90° etwas kleineren Winkel W zur Bodenfläche 30 des Mikrofluid-Kanals 27 angeordnet sind.

Im Bereich der beiden Wandungen 28, 29 wird daher das Parallelstrahlenbündel 24 nicht zurückreflektiert, sondern zur Seite hin abgelenkt, so dass die Wandungen 28, 29 als dunklere, scharfe Linien von der Kamera 25 erfasst werden und im entsprechenden Kamerabild schwarz erscheinen. Dies kann als Positionsinformation für die Lage der Mikrofluid-Kanäle 27 von der Steuereinrichtung 11 verarbeitet und der Galvanometerscanner 5 entsprechend so angesteuert werden, dass der Fokus 15 des Laser-Bearbeitungsstrahls 2 knapp seitlich außerhalb der beiden Wandungen 28, 29 auf die Grenzfläche zwischen Basisplatte 7 und Deckplatte 8 gerichtet werden kann. In üblicher Weise kann so eine Schweißnaht 31 zur hermetischen Abdichtung der Mikrofluid-Kanäle 27 hergestellt werden.

Die von der Kamera 25 erfasste Intensitätsverteilung ist in Fig. 2 im unteren Schaubild angedeutet, wo im Bereich der Oberfläche 14 und der Bodenfläche 30 eine hohen Intensität I_{H}, im Bereich der Wandungen 28, 29 demgegenüber eine niedrige Intensität I_{N} gemessen wird. Bei einer Ausrichtung des Mikrofluid-Kanals 27 parallel zur x-Achse ergibt sich dann eine zweidimensionale Intensitäts-Verteilung in der x-y-Ebene, wie sie in Fig. 2 unten schematisch dargestellt ist.

## Patentansprüche

1. Vorrichtung zur Positionssteuerung eines Laser-Bearbeitungsstrahls relativ zu topographischen Strukturmarken, insbesondere von Vertiefungen, in Oberflächen von Werkstücken, umfassend:
- eine Steuereinrichtung (11),
- eine Laserstrahl-Zuführeinrichtung (3, 4) zur Bereitstellung eines Laser-Bearbeitungsstrahls (2), und
- eine von der Steuereinrichtung (11) gesteuerte Laserstrahl-Positioniereinrichtung (5) zur Positionssteuerung des Laser-Bearbeitungsstrahls (2) auf der Oberfläche (14) relativ zu den Strukturmarken (27),
- eine optische Erkennungseinrichtung (16) für die Strukturmarken (27) mit
= einer Beleuchtungseinrichtung (17) zur Erzeugung eines die Oberfläche (14) mit den zu erkennenden Strukturmarken (27) in einem Abtastfeld (A) beleuchtenden Parallelstrahlenbündels (24), und
= einer das Abtastfeld (A) erfassenden Kamera (25) zur Aufnahme des von der Oberfläche (14) reflektierten, durch die Strukturmarken (27) veränderten Strahlenbündels (24), wobei das Kamerabild von der Steuereinrichtung (11) zur Lageerkennung der Strukturmarken (27) und zur dementsprechenden Positionssteuerung des Laser-Bearbeitungsstrahls (2) auswertbar ist.

2. Vorrichtung nach Anspruch 1, **dadurch gekennzeichnet, dass** das Parallelstrahlenbündel (24) der Beleuchtungseinrichtung (17) und der Strahlengang (26) der Kamera (25) koaxial mit dem Laser-Bearbeitungsstrahl (2) geführt sind.

3. Vorrichtung nach Anspruch 2, mit einer Fokussiereinrichtung (12) für den Laser-Bearbeitungsstrahl (2), **dadurch gekennzeichnet, dass** die Beleuchtungseinrichtung (17) eine monochromatische Lichtquelle (18) mit einer an die Brennweite der Fokussiereinrichtung (12) angepassten Konkav-Linse (20) zur Erzeugung eines divergenten Strahlenbündels (21) aufweist, das durch die Fokussiereinrichtung (12) in das Parallelstrahlenbündel (24) transformiert wird.

4. Vorrichtung nach einem der vorgenannten Ansprüche, **dadurch gekennzeichnet, dass** das divergente Strahlenbündel (21) und der Strahlengang (26) der Kamera (25) über dichromatische Spiegel (23) in den Strahlengang des Laser-Bearbeitungsstrahls (2) eingekoppelt werden.

5. Vorrichtung nach einem der Ansprüche 2 bis 4, **dadurch gekennzeichnet, dass** die Fokussiereinrichtung (12) eine F-Theta-Optik (13) aufweist.

6. Vorrichtung nach einem der vorgenannten Ansprüche, **dadurch gekennzeichnet, dass** der Laser-Bearbeitungsstrahl (2) ein Laser-Schweißstrahl für die Erzeugung einer Schweißnaht (31) zwischen zwei thermoplastischen Kunststoff-Fügepartnern (7, 8) entsprechend der Strukturmarken (27) in mindestens einem der Fügepartner (7, 8) ist.

## Claims

1. Device for the position control of a laser machining beam relative to topographical structural markers, in particular of depressions, in surfaces of workpieces, comprising:
- a control mechanism (11),
- a laser beam feed mechanism (3, 4) for providing a laser machining beam (2), and
- a laser beam positioning mechanism (5) controlled by the control mechanism (11) for the position control of the laser machining beam (2) on the surface (14) relative to the structural markers (27),
- an optical recognition mechanism (16) for the structural markers (27) with
= an illumination mechanism (17) for producing a parallel beam bundle (24), which illuminates the surface (14) with the structural markers (27) to be recognized in a scanning field (A), and
= a camera (25) detecting the scanning field (A) for recording the beam bundle (24), which is reflected by the surface (14) and changed by the structural markers (27), wherein the camera image can be evaluated by the control mechanism (11) to recognize the position of the structural markers (27) and for the corresponding position control of the laser machining beam (2).

2. Device according to claim 1, **characterized in that** the parallel beam bundle (24) of the illumination mechanism (17) and the beam path (26) of the camera (25) are guided coaxially with the laser machining beam (2).

3. Device according to claim 2, with a focusing mechanism (12) for the laser machining beam (2), **characterized in that** the illumination mechanism (17) has a monochromatic light source (18) with a concave lens (20) adapted to the focal length of the focusing mechanism (12) for producing a divergent beam bundle (21), which is transformed by the focusing mechanism (12) into the parallel beam bundle (24).

4. Device according to any one of the aforementioned claims, **characterized in that** the divergent beam bundle (21) and the beam path (26) of the camera (25) are coupled by dichromatic mirrors (23) into the beam path of the laser machining beam (2).

5. Device according to any one of claims 2 to 4, **characterized in that** the focusing mechanism (12) has an F-theta optical system (13).

6. Device according to any one of the aforementioned claims, **characterized in that** the laser machining beam (2) is a laser welding beam to produce a weld seam (31) between two thermoplastic material join partners (7, 8) in accordance with the structural markers (27) in at least one of the join partners (7, 8).

## Revendications

1. Dispositif de commande de position d'un faisceau d'usinage laser par rapport à des repères de structure topographiques, en particulier des creux, dans des surfaces de pièces, comprenant :
- un système de commande (11),
- un système d'amenée de faisceau laser (3, 4) destiné à fournir un faisceau d'usinage laser (2), et
- un système de positionnement de faisceau laser (5) commandé par le système de commande (11) pour commander la position du faisceau d'usinage laser (2) sur la surface (14) par rapport aux repères de structure (27),
- un système de détection optique (16) pour les repères de structure (27) comprenant
= un système d'éclairage (17) servant à générer un faisceau de rayons parallèles (24) éclairant la surface (14) comprenant les repères de structure (27) à détecter dans un champ de balayage (A), et
= une caméra (25) détectant le champ de balayage (A) et destinée à enregistrer le faisceau de rayons (24) modifié par les repères de structure (27) et réfléchi par la surface (14), l'image de la caméra pouvant être analysée par le système de commande (11) pour détecter la position des repères de structure (27) et pour commander en conséquence la position du faisceau d'usinage laser (2).

2. Dispositif selon la revendication 1, **caractérisé en ce que** le faisceau de rayons parallèles (24) du système d'éclairage (17) et la trajectoire de faisceau (26) de la caméra (25) sont guidés coaxialement avec le faisceau d'usinage laser (2).

3. Dispositif selon la revendication 2, comprenant un système de focalisation (12) pour le faisceau d'usinage laser (2), **caractérisé en ce que** le système d'éclairage (17) comprend une source de lumière (18) monochromatique pourvue d'une lentille concave (20) adaptée à la distance focale du système de focalisation (12) pour la génération d'un faisceau de rayons divergents (21), qui est transformé par le système de focalisation (12) en faisceau de rayons parallèles (24).

4. Dispositif selon l'une quelconque des revendications précédentes, **caractérisé en ce que** le faisceau de rayons divergents (21) et la trajectoire de faisceau (26) de la caméra (25) sont injectés dans la trajectoire de faisceau du faisceau d'usinage laser (2) au moyen de miroirs dichromatiques (23).

5. Dispositif selon l'une quelconque des revendications 2 à 4, **caractérisé en ce que** le système de focalisation (12) comprend une optique F-Thêta (13).

6. Dispositif selon l'une quelconque des revendications précédentes, **caractérisé en ce que** le faisceau d'usinage laser (2) est un faisceau de soudage laser pour la génération d'un cordon de soudure (31) entre deux éléments à assembler en matière thermoplastique (7, 8) en fonction des repères de structure (27) dans au moins un des éléments à assembler (7, 8).
